# EUROPÄISCHE PATENTANMELDUNG

(11) **EP 0 808 052 A2**
(43) Veröffentlichungstag der Anmeldung: **19.11.1997**
(21) Anmeldenummer: 97107746.6
(22) Anmeldetag: 12.05.1997
(51) Int. Cl.: H04M 9/08

(54) **Verfahren zur automatischen Justierung einer Schalteinrichtung zum automatischen Umschalten zwischen einer Empfangsbetriebsart und einer Sendebetriebsart bei einer Freisprecheinrichtung eines Kommunikationsendgerätes**

(30) Priorität: 17.05.1996 DE 19620031
(71) Anmelder: SIEMENS AKTIENGESELLSCHAFT, 80333 München (DE)
(72) Erfinder: Uhlemann, Stefan, 80807 München (DE)

(57) **Zusammenfassung**

Es wird ein Verfahren zur automatischen Justierung einer Schalteinrichtung (14 bis 18) zum automatischen Umschalten zwischen einer Empfangsbetriebsart und einer Sendebetriebsart bei einer Freisprecheinrichtung eines Kommunikationsendgerätes mit einem Empfangssignalzweig (3), in welchem empfangene Signale verarbeitet und über einen Lautsprecher (5) ausgegeben werden, einem Sendesignalzweig (2), in welchem über ein Mikrofon (4) erhaltene Signale verarbeitet und ausgegeben werden, und der zu justierenden Schalteinrichtung, durch welche im Empfangssignalzweig und im Sendesignalzweig vorgesehene Dämpfungsstufen (8, 9) selektiv in Abhängigkeit von über den Empfangssignalzweig und den Sendesignalzweig übertragenen Signalen ansteuerbar sind, und deren Empfindlichkeit für die über den Empfangssignalzweig und den Sendesignalzweig übertragenen Signale unter Verwendung eines Tonsignalgenerators (20) einstellbar ist, beschrieben. Das beschriebene Verfahren zeichnet sich dadurch aus, daß die Schalteinrichtung unter quantitativer Erfassung des Ausmaßes der Einkopplung eines vom Tonsignalgenerator erzeugten Testtonsignals vom Empfangssignalzweig auf den Sendesignalzweig und/oder vom Sendesignalzweig auf den Empfangssignalzweig justiert wird.

## Beschreibung

Die vorliegende Erfindung betrifft ein Verfahren gemäß dem Oberbegriff des Patentanspruchs 1, d.h. ein Verfahren zur automatischen Justierung einer Schalteinrichtung zum automatischen Umschalten zwischen einer Empfangsbetriebsart und einer Sendebetriebsart bei einer Freisprecheinrichtung eines Kommunikationsendgerätes mit einem Empfangssignalzweig, in welchem empfangene Signale verarbeitet und über einen Lautsprecher ausgegeben werden, einem Sendesignalzweig, in welchem über ein Mikrofon erhaltene Signale verarbeitet und ausgegeben werden, und der zu justierenden Schalteinrichtung, durch welche im Empfangssignalzweig und im Sendesignalzweig vorgesehene Dämpfungsstufen selektiv in Abhängigkeit von über den Empfangssignalzweig und den Sendesignalzweig übertragenen Signalen ansteuerbar sind, und deren Empfindlichkeit für die über den Empfangssignalzweig und den Sendesignalzweig übertragenen Signale unter Verwendung eines Tonsignalgenerators einstellbar ist.

Ein derartiges Verfahren ist beispielsweise aus der DE 44 47 028 A1 bekannt.

Die durch das dort beschriebene Verfahren zu justierende Freisprecheinrichtung ist Bestandteil eines digitalen Kommunikationsendgerätes wie beispielsweise eines Telefons oder dergleichen und umfaßt einen Empfangssignalzweig, einen Sendesignalzweig und eine Schalteinrichtung zum automatischen Umschalten zwischen einer Empfangsbetriebsart und einer Sendebetriebsart.

Der Empfangssignalzweig dient dazu, über einen Eingangsanschluß empfangenen Eingangssignale zu verarbeiten und über einen Lautsprecher auszugeben; der Sendesignalzweig dient dazu, über ein Mikrofon erhaltene Eingangssignale zu verarbeiten und über einen Ausgangsanschluß auszugeben.

In der Empfangsbetriebsart werden vom Eingangsanschluß empfangene Signale über den Lautsprecher ausgegeben, wohingegen die Weiterleitung von über das Mikrofon erhaltenen Signalen zum Ausgangsanschluß ganz oder teilweise unterbunden wird; in der Sendebetriebsart werden über das Mikrofon empfangene Signale zum Ausgangsanschluß weitergeleitet, wohingegen die Ausgabe von empfangenen Signalen aus dem Lautsprecher ganz oder teilweise unterbunden wird.

Das "normale" Betreiben nur entweder des Empfangssignalzweiges oder des Sendesignalzweiges und das Sperren (Dämpfen, Unterbrechen) des jeweils anderen Zweiges dient insbesondere der Vermeidung einer Einkopplung von Signalen vom Empfangssignalzweig auf den Sendesignalzweig. Eine derartige Einkopplung von Signalen vom Empfangssignalzweig auf den Sendesignalzweig wird in der Regel in erster Linie dadurch verursacht, daß vom Lautsprecher des Empfangssignalzweiges ausgegebene Signale vom Mikrofon des Sendesignalzweiges aufgenommen werden. Dieser Effekt ist verständlicherweise unerwünscht, da dadurch die eigentlich zu übertragenden Signale mit einem Echo versehen oder durch ein Rückkopplungs-Pfeifen überdeckt werden.

Zur selektiven Aktivierung entweder des Empfangssignalzweiges oder des Sendesignalzweiges und zum Sperren des jeweils anderen Zweiges weist das bekannte Gerät in seinem Empfangssignalzweig und seinem Sendesignalzweig jeweils eine Dämpfungsstufe auf, die durch die eingangs bereits erwähnte Schalteinrichtung selektiv ansteuerbar sind.

Die Schalteinrichtung steuert die Dämpfungsstufen in Abhängigkeit von den über den Empfangssignalzweig und den Sendesignalzweig geführten Signalen an. Dabei kommt ein Sprachsignalkomparator zum Einsatz, durch den die Pegel der jeweiligen Signale verglichen werden. Um dem Sprachsignalkomparator unterschiedliche Empfindlichkeiten für die zu vergleichenden Signale zu verleihen, was insbesondere zur Handhabung der sogenannten empfangsseitigen Selbstunterbrechung von Bedeutung ist, ist einem der Eingange des Sprachsignalkomparators ein Verstärker mit einstellbarem Verstärkungsfaktor vorgeschaltet. Durch die Einstellung des Verstärkungsfaktors dieses Verstärkers kann Einfluß auf das Schaltverhalten der Schalteinrichtung genommen werden.

Die Ermittlung der optimalen Einstellung des Verstärkungsfaktors erfolgt unter Verwendung eines Tonsignalgenerators, durch welchen wahrend des Justiervorganges ein Tonsignal als Empfangssignal (Pseudo-Sprachsignal) in den Empfangssignalzweig eingespeist wird. Der Verstärkungsfaktor des Verstärkers wird zur Ermittlung der optimalen Einstellung desselben zunächst so lange verstellt, bis der Punkt erreicht ist, an dem die Schalteinrichtung eine Umschaltung von der Empfangsbetriebsart in die Sendebetriebsart veranlaßt. Ausgehend von dieser Einstellung wird er abschließend nochmals um ein gewisses Maß dahingehend verändert, daß die Freisprecheinrichtung sicher die Empfangsbetriebsart beibehält, die bestimmungsgemäße Kommunikation störende (unterbrechende) Schaltvorgänge also vermieden werden.

Eine derartige Einstellung des Verstärkungsfaktors ist - auch wenn sie automatisch durchgeführt wird - relativ zeitaufwendig und - da der Verstärkungsfaktor auf die beschriebene Weise erkennbar nur jeweils ungefähr auf den jeweils optimalen Wert eingestellt werden kann - vor allem ungenau. Eine nicht optimale Wahl des Verstärkungsfaktors hat zur Folge, daß die Umschaltung zwischen den Betriebsarten der Freisprecheinrichtung nicht zu den richtigen Zeitpunkten, also zu früh, zu spät oder überhaupt nicht erfolgt, wodurch eine Kommunikation über die Freisprecheinrichtung unter Umständen erheblich beeinträchtigt oder gar unmöglich gemacht werden kann.

Der vorliegenden Erfindung liegt daher die Aufgabe zugrunde, das Verfahren gemäß dem Oberbegriff des Patentanspruchs 1 derart weiterzubilden, daß eine jeweils optimale Justierung der Schalteinrichtung ermöglicht wird.

Diese Aufgabe wird erfindungsgemäß durch die im kennzeichnenden Teil des Patentanspruchs 1 beanspruchten Merkmale gelöst.

Demnach ist vorgesehen, daß die Schalteinrichtung unter quantitativer Erfassung des Ausmaßes der Einkopplung eines vom Tonsignalgenerator erzeugten Testtonsignals vom Empfangssignalzweig auf den Sendesignalzweig und/oder vom Sendesignalzweig auf den Empfangssignalzweig justiert wird.

Die Kenntnis des Ausmaßes der Einkopplung von Signalen des einen Zweiges auf den jeweils anderen Zweig erlaubt es, die Justierung des Schaltverhaltens der Schalteinrichtung nicht etwa wie bisher unter wiederholter bzw. fortgesetzter Variierung der veränderbaren bzw. einzustellenden Parameter selbst, sondern auf rechnerische Weise zu ermitteln. Eine derartige Parameterermittlung und -einstellung ist erkennbar erheblich exakter als die bekannte experimentelle, teilweise sogar auf ungefähren Schätzungen beruhende Parameterermittlung.

Ermittlung und Einstellung der jeweils einzustellenden Parameter der Schalteinrichtung können mangels langwieriger Versuchsreihen zum experimentellen Auffinden der (vermeintlich) optimalen Einstellung auch sehr schnell durchgeführt werden, so daß nur eine sehr geringe Wahrscheinlichkeit besteht, daß die Justierung durch gelegentlich auftretende Umgebungsgeräusche oder dergleichen gestört bzw. beeinträchtigt wird. Dies trägt - abgesehen von dem dadurch erzielbaren Zeitgewinn - erheblich dazu bei, daß selbst unter schwierigen Einstellbedingungen eine nicht nur ungefähre, sondern stets exakt an die gegebenen Verhältnisse angepaßte Schalteinrichtungs-Justierung durchführbar ist.

Die schnelle Ermittelbarkeit und Einstellbarkeit der Schalteinrichtungs-Parameter eröffnet die Möglichkeit, bereits im Herstellungsbetrieb einen Freisprecheinrichtungs-Abgleich (zum Eliminieren von Bauelemente-Toleranzen und dergleichen) vorzunehmen. Dies war bislang aufgrund der hierfür benötigten Zeit überhaupt nicht oder allenfalls unter unverhältnismäßig hohem Aufwand durchführbar.

Die schnelle und einfache Ermittelbarkeit und Einstellbarkeit der Schalteinrichtungs-Parameter schafft darüber hinaus auch einen Anreiz, diese auch an nur kurzzeitig veränderte akustische Verhältnisse (beispielsweise an vorübergehend veränderte Hallbedingungen) anzupassen.

Es wurde mithin ein Verfahren gefunden, durch welches auf einfache Weise und in kurzer Zeit eine jeweils optimale Anpassung einer Freisprecheinrichtung an die gegebenen Verhältnisse ermöglicht wird.

Vorteilhafte Weiterbildungen der Erfindung sind Gegenstand der Unteransprüche.

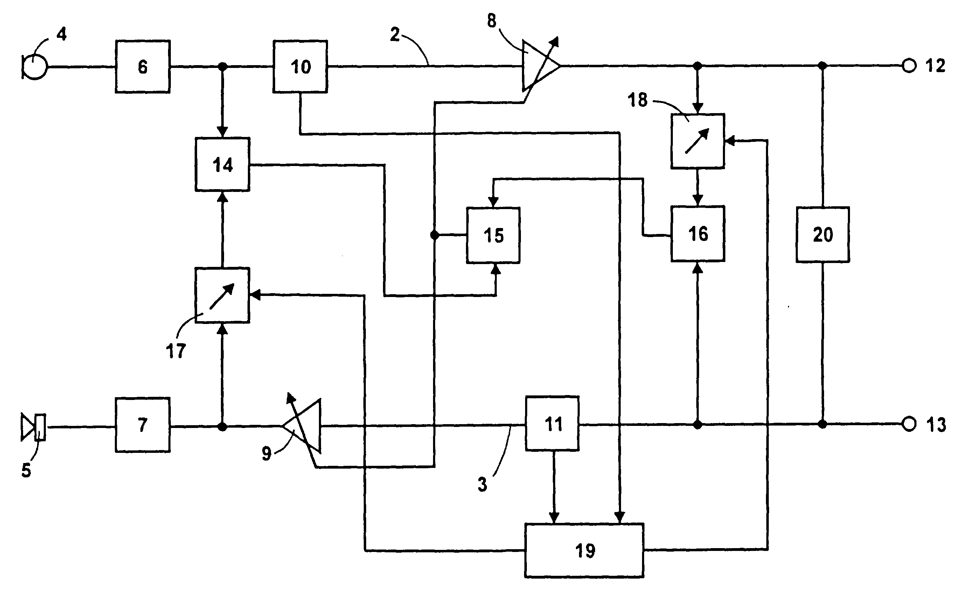

Die Erfindung wird nachfolgend anhand eines Ausführungsbeispiels unter Bezugnahme auf die Zeichnung naher erläutert.

Die Figur zeigt schematisch den Aufbau einer Freisprecheinrichtung, bei welcher das erfindungsgemäße Verfahren einsetzbar ist.

Die in der Figur gezeigte Freisprecheinrichtung ist Bestandteil eines Kommunikationsendgerätes wie beispielsweise eines digitalen Telefons oder dergleichen, wobei jedoch keine Einschränkung hierauf besteht.

Die Freisprecheinrichtung umfaßt einen Sendesignalzweig 2, einen Empfangssignalzweig 3, eine Schalteinrichtung zum automatischen Umschalten zwischen einer Empfangsbetriebsart und einer Sendebetriebsart der Freisprecheinrichtung, und eine Justiereinrichtung zum automatischen Justieren der Schalteinrichtung.

Der Empfangssignalzweig 3 umfaßt einen Eingangsanschluß in Form einer Eingangsklemme 13, einen Empfangssignal-Automatikverstärker 11 mit automatischer Verstärkungsregelung, eine Empfangssignal-Dämpfungsstufe 9, eine Empfangssignal-Bearbeitungsstufe 7 sowie einen Lautsprecher 5.

Der Sendesignalzweig 2 umfaßt ein Mikrofon 4, eine Sendesignal-Bearbeitungsstufe 6, einen Sendesignal-Automatikverstärker 10 mit automatischer Verstärkungsregelung, eine Sendesignal-Dämpfungsstufe 8 sowie einen Ausgangsanschluß in Form einer Ausgangsklemme 12.

Die Schalteinrichtung umfaßt einen ersten einstellbaren Verstärker 17, einen ersten Sprachsignalkomparator 14, einen zweiten einstellbaren Verstärker 18, einen zweiten Sprachsignalkomparator 16 und eine Dämpfungssteuereinheit 15.

Die Justiereinrichtung umfaßt eine Einstelleinrichtung 19 und einen Tonsignalgenerator 20.

Die genannten Elemente sind wie in der Figur gezeigt und wie im Rahmen der nachfolgenden Funktions- und Wirkungsbeschreibung beschrieben verschaltet.

Die Freisprecheinrichtung ist über die Eingangsklemme 13 und die Ausgangsklemme 12 beispielsweise mit einer Übertragungsstrecke, einer Vermittlungsstation oder einer sonstigen externen Beschaltung, beispielsweise zur Sprachsignalkompression oder Sprachsignalexpansion verbunden. Über die Eingangsklemme 13 werden mittels des Lautsprechers 5 hörbar zu machende Tonsignale von einer Gegenstelle empfangen, und über die Ausgangsklemme 12 werden vom Mikrofon 4 aufgenommene und zur Gegenstelle zu übertragende Tonsignale ausgegeben.

Die Freisprecheinrichtung ist selektiv zwischen einer Empfangsbetriebsart und einer Sendebetriebsart umschaltbar.

In der Empfangsbetriebsart ist die Empfangssignal-Dämpfungsstufe 9 für anliegende Signale durchlässig, wohingegen die Sendesignal-Dämpfungsstufe 8 anliegende Signale nicht oder allenfalls stark gedämpft (der Hub liegt in der Regel zwischen 25 und 40 dB) passieren läßt. Über die Eingangsklemme 13 empfangene Signale werden in diesem Fall demnach durch den Empfangssignal-Automatikverstärker 11 verstärkt, passieren im wesentlichen ungehindert die Empfangssignal-Dämpfungsstufe 9, werden in der Empfangssignal-Bearbeitungsstufe 7 verarbeitet, und werden schließlich über den Lautsprecher 5 als hörbares Tonsignal ausgegeben. Andererseits werden durch das Mikrofon 4 aufgenommene Signale in der Sendesignal-Bearbeitungsstufe 6 verarbeitet und durch den Sendesignal-Automatikverstärker 10 verstärkt, dann aber durch die sperrende Sendesignal-Dämpfungsstufe 8 an der Fortpflanzung zur Ausgangsklemme 12 hin gehindert. In der Empfangsbetriebsart der Freisprecheinrichtung werden also über die Eingangsklemme 13 empfangene Signale über den Lautsprecher 5 ausgegeben, wohingegen über das Mikrofon 4 erhaltene Signale abgeblockt, d.h. nicht oder allenfalls stark gedämpft über die Ausgangsklemme 12 ausgegeben werden.

Im Gegensatz hierzu ist in der Sendebetriebsart die Sendesignal-Dämpfungsstufe 8 für anliegende Signale durchlässig, wohingegen die Empfangssignal-Dämpfungsstufe 9 anliegende Signale nicht oder allenfalls stark gedämpft (der Hub liegt in der Regel zwischen 25 und 40 dB) passieren läßt. Über das Mikrofon 4 erhaltene Signale werden in diesem Fall also durch die Sendesignal-Bearbeitungsstufe 6 bearbeitet, werden durch den Sendesignal-Automatikverstärker 10 verstärkt, passieren im wesentlichen ungehindert die Sendesignal-Dämpfungsstufe 8, und werden schließlich über die Ausgangsklemme 12 ausgegeben. Andererseits werden über die Eingangsklemme 13 empfangene Signale durch den Empfangssignal-Automatikverstarker 11 verstärkt, dann aber durch die sperrende Empfangssignal-Dämpfungsstufe 9 an der Fortpflanzung zum Lautsprecher 5 hin gehindert. In der Sendebetriebsart der Freisprecheinrichtung werden also über das Mikrofon aufgenommene Signale über die Ausgangsklemme 12 ausgegeben, wohingegen über die Eingangsklemme 13 empfangene Signale abgeblockt, d.h. nicht oder allenfalls stark gedämpft über den Lautsprecher 5 ausgegeben werden.

Die genannten Automatikverstärker, d.h. der Empfangssignal-Automatikverstarker 11 und der Sendesignal-Automatikverstärker 10 verfügen, wie vorstehend bereits angedeutet wurde, über eine automatische Verstärkungsregelung, durch die bewirkt wird, daß (innerhalb gewisser Grenzen) unabhängig vom Pegel des in den jeweiligen Verstärker eingegebenen Signals ein im Mittel konstantes Ausgangssignal erzeugt wird.

Die genannten Bearbeitungsstufen, d.h. die Empfangssignal-Bearbeitungsstufe 7 und die Sendesignal-Bearbeitungsstufe 6 dienen unter anderem dazu, eine Analog/Digital-Wandlung bzw. Digital/Analog-Wandlung durchzuführen.

Die genannten Dämpfungsstufen, d.h. die Empfangssignal-Dämpfungsstufe 9 und die Sendesignal-Dämpfungsstufe 8 dienen, wie vorstehend bereits erläutert wurde, der selektiven Einstellung der Empfangs- und Sendebetriebsarten. Durch das Betreiben der Freisprecheinrichtung entweder in der Empfangsbetriebsart oder in der Sendebetriebsart kann die Ausbildung von Echos (akustisches Echo und Leitungsecho) und/oder Rückkopplungseffekten vermieden werden. Die Umschaltung der Freisprecheinrichtung von der Empfangsbetriebsart in die Sendebetriebsart und umgekehrt, also die selektive Veranlassung der Dämpfungsstufen zum Durchlassen bzw. Blockieren der daran anliegenden Signale erfolgt durch die vorstehend bereits erwähnte Schalteinrichtung.

Das durch die Schalteinrichtung veranlaßte Umschalten zwischen den jeweiligen Betriebsarten erfolgt in Abhängigkeit von einem nachfolgend noch detaillierter erläuterten Sprachsignalvergleich. Um zu gewährleisten, daß hierbei tatsächlich nur Sprachsignale Berücksichtigung finden, enthält die Schalteinrichtung einen oder mehrere, in der Figur nicht gezeigte Sprachsignaldetektoren. Durch diese Sprachsignaldetektoren wird ermittelt, ob die jeweils zu vergleichenden Signale Sprachsignale sind. Wird dabei festgestellt, daß dies nicht der Fall ist, werden die Weiterleitung der betreffenden Signale oder der darauf basierenden Auswertungsergebnisse unterbunden und/oder der jeweilige Sprachsignalkomparator und/oder die Dampfungssteuereinheit 15 von dieser Feststellung in Kenntnis gesetzt, damit diese entsprechend darauf reagieren können.

Die Schalteinrichtung, genauer gesagt deren Dämpfungssteuereinheit 15 weist eine Verbindung zu den Dämpfungsstufen auf, über welche diese selektiv ansteuerbar sind. Die Ansteuerung der Dämpfungsstufen zur Veränderung deren Dämpfungsverhaltens erfolgt vorzugsweise derart, daß die Dämpfung nicht sprungartig, sondern jeweils leicht gedämpft (unter rampenartiger Veränderung) auf den gewünschten Endzustand oder Endwert ansteigt oder abfällt.

Die Dämpfungssteuereinheit 15 entscheidet über die Einstellung der Dämpfungsglieder unter Berücksichtigung von Eingangssignalen, die vom ersten Sprachsignalkomparator 14 und vom zweiten Sprachsignalkomparator 16 stammen. Die Sprachsignalkomparatoren vergleichen jeweils die Pegel der über den Sendesignalzweig 2 und den Empfangssignalzweig 3 übertragenen (Sprach-)Signale und geben das Ergebnis des Vergleichs als Eingangssignale für die Dämpfungssteuereinheit 15 aus. Um die Empfindlichkeit für die in die Sprachsignalkomparatoren zum Vergleich eingegebenen Signale variieren zu können, wird jeweils eines der in einen jeweiligen Sprachsignalkomparator eingegebenen Signale über einen einstellbaren Verstärker geführt.

Dem ersten Sprachsignalkomparator 14 ist der erste einstellbare Verstärker 17 zugeordnet. Dieser erste einstellbare Verstärker verstärkt das vom Empfangssignalzweig 3 abgegriffene Sprachsignal vor dessen Zuführung zum ersten Sprachsignalkomparator 14; der erste Sprachsignalkomparator 14 wird dadurch für das Empfangssignal empfindlicher.

Dem zweiten Sprachsignalkomparator 16 ist der zweite einstellbare Verstärker 18 zugeordnet. Dieser zweite einstellbare Verstärker verstärkt das vom Sendesignalzweig abgegriffene Sprachsignal vor dessen Zuführung zum zweiten Sprachsignalkomparator 16; der zweite Sprachsignalkomparator 16 wird dadurch für das Sendesignal empfindlicher.

Der erste Sprachsignalkomparator 14 und der zweite Sprachsignalkomparator 16 vergleichen Empfangs- und Sendesignale, die - wie aus der Figur ersichtlich ist - von verschiedenen Stellen des Empfangssignalzweiges 3 und des Sendesignalzweiges 2 abgegriffen werden, wobei die jeweiligen Abgriffsstellen erkennbar nicht auf die in der Figur gezeigten Punkte beschränkt sind.

Die Funktion des ersten Sprachsignalkomparators 14 und des ersten einstellbaren Verstärkers 17 besteht in der Vermeidung einer empfangsseitigen Selbstunterbrechung der Freisprecheinrichtung, d.h. einer von den empfangenen Signalen mittelbar selbst verursachten Umschaltung von der Empfangsbetriebsart in die Sendebetriebsart. Dieser Fall kann auftreten, wenn die über den Lautsprecher 5 ausgegebenen Empfangssignale vom Mikrofon 4 aufgenommen und auf dem Sendesignalzweig 2 schließlich in einer Intensität vorliegen, die den Pegel der Empfangssignale auf dem Empfangssignalzweig übersteigt, was insbesondere beim Vorliegen eines zeitlichen Versatzes der gegenüberzustellenden Signale der Fall sein kann. Zur Vermeidung dadurch verursachter Betriebsart-Umschaltungen wird das Empfangssignal vor dem Vergleich mit dem Sendesignal durch den einstellbaren Verstärker 17 verstärkt. Dadurch kann das vom Empfangssignalzweig 3 abgegriffene Empfangssignal auf einen Pegel angehoben werden, der stets höher ist als der Pegel des auf das Empfangssignal zurückgehenden Sendesignals.

Entsprechendes gilt für den zweiten Sprachsignalkomparator 16 und den zweiten einstellbaren Verstärker 18. Deren Funktion besteht in der Vermeidung einer sendeseitigen Selbstunterbrechung der Freisprecheinrichtung, d.h. einer von den aus dem Sendesignalzweig versandten Signalen mittelbar selbst verursachten Umschaltung von der Sendebetriebsart in die Empfangsbetriebsart. Dieser Fall kann auftreten, wenn die über die Ausgangsklesme 12 ausgegebenen Sendesignale über eine äußere Beschaltung der Freisprecheinrichtung in die Eingangsklemme 13 eingeschleust und auf dem Empfangssignalzweig 3 in einer Intensität vorliegen, die den Pegel der Sendesignale auf dem Sendesignalzweig übersteigt, was insbesondere beim Vorliegen eines zeitlichen Versatzes der gegenüberzustellenden Signale der Fall sein kann. Zur Vermeidung dadurch verursachter Betriebsart-Umschaltungen wird das Sendesignal vor dem Vergleich mit dem Empfangssignal durch den einstellbaren Verstärker 18 verstärkt. Dadurch kann das vom Sendesignalzweig 2 abgegriffene Sendesignal auf einen Pegel angehoben werden, der stets höher ist als der Pegel des auf das Sendesignal zurückgehenden Empfangssignals.

Die an den einstellbaren Verstärkern 17 und 18 eingestellten Verstärkungsfaktoren dürfen nicht willkürlich gewählt werden, sondern bedürfen einer Optimierung. Sie müssen, um die Wahrscheinlichkeit der genannten Selbstunterbrechungen der Freisprecheinrichtung zu verhindern, einen gewissen Mindestwert aufweisen; sie dürfen andererseits jedoch auch nicht zu hoch gewählt werden, weil dies dann zunehmend auch gewollte Umschaltungen unterbinden würde.

Die Einstellung der Verstärkungsfaktoren der einstellbaren Verstärker, also die Justierung der Schalteinrichtung bzw. deren Schaltverhaltens erfolgt durch die Justiereinrichtung, genauer gesagt deren Einstelleinrichtung 19.

In der Einstelleinrichtung 19 sind die zuvor ermittelten optimalen Verstärkungsfaktoren für die einstellbaren Verstärker 17, 18 gespeichert und werden zur Einstellung derselben verwendet. Die Ermittlung der optimalen Verstärkungsfaktoren geht dabei wie folgt vor sich:

Es wird davon ausgegangen, daß der Dämpfungsfaktor der Dämpfungsstufe 9 bekannt ist bzw. auf einen bekannten Wert eingestellt wird. Es wird ferner davon ausgegangen, daß die im Normalbetrieb im Mittelwert konstant gehaltenen Pegel der aus den Automatikverstärkern 10 und 11 ausgegebenen Signale und die Pegel der vom Tonsignalgenerator 20 ausgegebenen Signale bekannt sind.

Zur optimalen Einstellung der Empfindlichkeit des Sprachsignalkomparators 14 sind drei vorbereitende Vorkehrungen zu treffen: Zum einen wird die automatische Verstärkungsregelung des Empfangssignal-Automatikverstärkers 11 abgeschaltet, so daß dieser mit einer konstanten Verstärkung arbeitet; alternativ kann der Empfangssignal-Automatikverstarker 11 auch aus dem Empfangssignalzweig herausgenommen oder überbrückt werden. Ferner wird der im "Normalbetrieb" nicht mit der Freisprecheinrichtung verbundene Tonsignalgenerator 20 mit der Eingangsklemme 13 verbunden und zur Abgabe eines Pseudo-Sprachsignals in Form eines Testtonsignals oder einer Testtonsignalfolge veranlaßt. Schließlich wird die Verbindung zwischen der Eingangsklemme 13 und der gegebenenfalls daran angeschlossenen externen Beschaltung getrennt, um nur das Pseudo-Sprachsignal des Tonsignalgenerator als Empfangssignal für den Empfangssignalzweig vorliegen zu haben. Im Anschluß an das Anlegen des Pseudo-Sprachsignals, genauer gesagt nach dem Abklingen der dadurch hervorgerufenen Einschwingvorgänge wird von der Einstelleinrichtung 19 der Verstärkungsfaktor des Sendesignal-Automatikverstärkers 10 abgefragt. Der Sendesignal-Automatikverstärker 10 ist zu diesem Zweck derart ausgebildet, daß er den momentanen Verstärkungsfaktor dauernd oder auf Anfrage als zusätzliches Ausgangssignal (im vorliegenden Ausführungsbeispiel an die Einstelleinrichtung 19) ausgibt oder ausgeben kann.

Aus den von Anfang an bekannten und im Verlauf der Justierung ermittelten Verstärkungs- und/oder Dämpfungsfaktoren und Signalpegeln kann das Ausmaß der Einkopplung des vom Tonsignalgenerator erzeugten Testtonsignals vom Empfangssignalzweig auf den Sendesignalzweig errechnet werden. Dessen Kenntnis, genauer gesagt die sich dadurch eröffnende Möglichkeit, die größenmäßige Beziehung zwischen den Pegeln der durch den Sprachsignalkomparator 14 zu vergleichenden Signale zu ermitteln, erlaubt es wiederum, den Verstärkungsfaktor für den einstellbaren Verstärker 17 so festzulegen, daß einerseits eine empfangsseitige Selbstunterbrechung, andererseits aber auch ein unbegründetes Verharren in der Empfangsbetriebsart verhindert wird.

Zur optimalen Einstellung der Empfindlichkeit des Sprachsignalkomparators 16 sind (ausgehend vom "Normalzustand") zwei vorbereitende Vorkehrungen zu treffen: Zum einen wird der im "Normalbetrieb" nicht mit der Freisprecheinrichtung verbundene Tonsignalgenerator 20 mit der Ausgangsklemme 12 verbunden und zur Abgabe eines Pseudo-Sprachsignals in Form eines Testtonsignals oder einer Testtonsignalfolge veranlaßt. Zum anderen wird der Sendesignalzweig 2 (beispielsweise zwischen der Sendesignal-Dämpfungsstufe 8 und der Ausgangsklemme 12) unterbrochen, um nur das Pseudo-Sprachsignal des Tonsignalgenerators als Ausgangssignal aus dem Sendesignalzweig vorliegen zu haben. Im Anschluß an das Anlegen des Pseudo-Sprachsignals, genauer gesagt nach dem Abklingen der dadurch hervorgerufenen Einschwingvorgänge wird von der Einstelleinrichtung 19 der Verstärkungsfaktor des Empfangssignal-Automatikverstärkers 11 abgefragt. Der Empfangssignal-Automatikverstärker 11 ist zu diesem Zweck wie der Sendesignal-Automatikverstärker 10 derart ausgebildet, daß er den momentanen Verstärkungsfaktor dauernd oder auf Anfrage als zusätzliches Ausgangssignal (im vorliegenden Ausführungsbeispiel an die Einstelleinrichtung 19) ausgibt oder ausgeben kann.

Aus den von Anfang an bekannten und im Verlauf der Justierung ermittelten Verstärkungs- und/oder Dämpfungsfaktoren und Signalpegeln kann das Ausmaß der Einkopplung des vom Tonsignalgenerator erzeugten Testtonsignals vom Sendesignalzweig auf den Empfangssignalzweig errechnet werden. Dessen Kenntnis, genauer gesagt die sich dadurch eröffnende Möglichkeit, die größenmäßige Beziehung zwischen den Pegeln der durch den Sprachsignalkomparator 16 zu vergleichenden Signale zu ermitteln, erlaubt es wiederum, den Verstärkungsfaktor für den einstellbaren Verstärker 18 so festzulegen, daß einerseits eine sendeseitige Selbstunterbrechung, andererseits aber auch ein unbegründetes Verharren in der Sendebetriebsart verhindert wird.

Das quantitative Erfassen des Ausmaßes der Einkopplung eines vom Tonsignalgenerator 20 erzeugten Pseudo-Sprachsignals vom Empfangssignalzweig auf den Sendesignalzweig und/oder vom Sendesignalzweig auf den Empfangssignalzweig ermöglicht die Justierung des Umschaltverhaltens einer Freisprecheinrichtung in einer bisher nicht gekannten Präzision auf den unter den gegebenen Umständen jeweils optimalen Wert.

Das quantitative Erfassen des Ausmaßes der Einkopplung eines vom Tonsignalgenerator 20 erzeugten Pseudo-Sprachsignals vom Empfangssignalzweig auf den Sendesignalzweig und/oder vom Sendesignalzweig auf den Empfangssignalzweig erfolgte beim beschriebenen Ausführungsbeispiel auf dem Umweg über die Auswertung von teils bekannten, teils gesondert ermittelten Signalpegeln und Verstärkungs- und/oder Dämpfungsfaktoren der vom Pseudo-Sprachsignal durchlaufenen Komponenten in den Empfangssignal- und Sendesignalzweigen. Die quantitative Ermittlung der besagten Einkopplung kann jedoch auch auf andere Weise durchgeführt werden, beispielsweise durch Messung der Pegel des über den Empfangssignal- und Sendesignalzweig laufenden Pseudo-Sprachsignals an den interessierenden Punkten.

## Patentansprüche

1. Verfahren zur automatischen Justierung einer Schalteinrichtung (14 bis 18) zum automatischen Umschalten zwischen einer Empfangsbetriebsart und einer Sendebetriebsart bei einer Freisprecheinrichtung eines Kommunikationsendgerätes mit
einem Empfangssignalzweig (3), in welchem empfangene Signale verarbeitet und über einen Lautsprecher (5) ausgegeben werden,
einem Sendesignalzweig (2), in welchem über ein Mikrofon (4) erhaltene Signale verarbeitet und ausgegeben werden, und
der zu justierenden Schalteinrichtung,
durch welche im Empfangssignalzweig und im Sendesignalzweig vorgesehene Dämpfungsstufen (8, 9) selektiv in Abhängigkeit von über den Empfangssignalzweig und den Sendesignalzweig übertragenen Signalen ansteuerbar sind, und
deren Empfindlichkeit für die über den Empfangssignalzweig und den Sendesignalzweig übertragenen Signale unter Verwendung eines Tonsignalgenerators (20) einstellbar ist,
**dadurch gekennzeichnet**,
daß die Schalteinrichtung unter quantitativer Erfassung des Ausmaßes der Einkopplung eines vom Tonsignalgenerator erzeugten Testtonsignals vom Empfangssignalzweig auf den Sendesignalzweig und/oder vom Sendesignalzweig auf den Empfangssignalzweig justiert wird.

2. Verfahren nach Anspruch 1,
**dadurch gekennzeichnet**,
daß die Schalteinrichtung (14 bis 18) eine Vorrichtung (14, 17) zur Vermeidung einer empfangsseitigen Selbstunterbrechung und eine Vorrichtung (16, 18) zur Vermeidung einer sendeseitigen Selbstunterbrechung umfaßt.

3. Verfahren nach Anspruch 2,
**dadurch gekennzeichnet**,
daß die Vorrichtungen (14, 16, 17, 18) zur Vermeidung der Selbstunterbrechung jeweils einen
Sprachsignalkomparator (14, 16), durch den die Pegel der über den Empfangssignalzweig (3) und Sendesignalzweig (2) geführten Signale verglichen werden, und
einen einstellbaren Verstärker (17, 18) aufweisen, durch den jeweils eines der zu vergleichenden Signale vor dessen Eingabe in den jeweiligen Sprachsignalkomparator verstärkbar ist.

4. Verfahren nach Anspruch 3,
**dadurch gekennzeichnet**,
daß durch den einstellbaren Verstärker (17) der Vorrichtung (14, 17) zur Vermeidung der empfangsseitigen Selbstunterbrechung das über den Empfangssignalzweig (3) geführte Signal verstärkt wird, und daß durch den einstellbaren Verstärker (18) der Vorrichtung (16, 18) zur Vermeidung der sendeseitigen Selbstunterbrechung das über den Sendesignalzweig (2) geführte Signal verstärkt wird.

5. Verfahren nach einem der vorhergehenden Ansprüche,
**dadurch gekennzeichnet**,
daß die quantitative Erfassung des Ausmaßes der Einkopplung eines auf den Empfangssignalzweig (3) gegebenen Testtonsignals auf den Sendesignalzweig (2) und/oder der Einkopplung eines auf den Sendesignalzweig gegebenen Testtonsignals auf den Empfangssignalzweig unter zumindest teilweiser Auswertung der Verstärkungs- und/oder Dämpfungsfaktoren von vom Testtonsignal durchlaufenen Elementen des Empfangssignalzweiges und des Sendesignalzweiges bewerkstelligt wird.

6. Verfahren nach Anspruch 5,
**dadurch gekennzeichnet**,
daß die Verstärkungs- und/oder Dämpfungsfaktoren der vom Testtonsignal durchlaufenen Elemente, sofern sie nicht konstant und bekannt sind, zumindest teilweise auf bekannte konstante Werte eingestellt und/oder vor oder während der Erfassung des Ausmaßes der Einkopplung quantitativ ermittelt werden.

7. Verfahren nach Anspruch 6,
**dadurch gekennzeichnet**,
daß unter den Elementen des Empfangssignalzweiges (3) und den Elementen des Sendesignalzweiges (2), welche das Testtonsignal durchläuft, zumindest ein Verstärker (10, 11) mit automatischer Verstärkungsregelung zur Erzielung eines Ausgangssignals mit konstantem Pegel vorgesehen wird.
